(19) Europäisches Patentamt
European Patent Office
Office européen des brevets

(11) **EP 4 675 247 A1**

(12) **EUROPEAN PATENT APPLICATION**
published in accordance with Art. 153(4) EPC

(43) Date of publication:
**07.01.2026 Bulletin 2026/02**

(21) Application number: **24763677.2**

(22) Date of filing: **19.02.2024**

(51) International Patent Classification (IPC):
***G01M 13/045*** (2019.01)

(52) Cooperative Patent Classification (CPC):
**G01M 13/045**

(86) International application number:
**PCT/JP2024/005694**

(87) International publication number:
**WO 2024/181196 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 JP 2023029763**

(71) Applicant: **NTN Corporation
Osaka-shi Osaka 530-0005 (JP)**

(72) Inventors:
• **TSUTSUI, Hideyuki
Kuwana-shi, Mie 511-0867 (JP)**
• **SAKAGUCHI, Tomoya
Kuwana-shi, Mie 511-0867 (JP)**
• **TANI, Ryouji
Kuwana-shi, Mie 511-0867 (JP)**

(74) Representative: **Bockhorni & Brüntjen
Partnerschaft
Patentanwälte mbB
Agnes-Bernauer-Straße 88
80687 München (DE)**

(54) **DETERMINATION METHOD, PROGRAM, AND COMPUTATION DEVICE**

(57) A determination method for a characteristic of a rotary machine includes: calculating a first spring constant between a rolling element (15) and a first bearing ring (IIA); calculating a second spring constant between the rolling element (15) and a second bearing ring (12A); calculating a third spring constant of a first finite element model (11M); calculating a fourth spring constant of a second finite element model (12M); calculating a spring constant of a third finite element model (15M) based on the first spring constant to the fourth spring constant; and determining a characteristic of the rotary machine by using the calculated spring constant of the third finite element model (15M).

FIG.8

```
START
  │
  ▼                                          S11
CALCULATE SPRING CONSTANT Kh1 OF ROLLING ELEMENT 15
IN CONTACT REGION Ar1 BY USING HERTZ THEORY
  │
  ▼                                          S12
CALCULATE SPRING CONSTANT Kh2 OF ROLLING ELEMENT 15
IN CONTACT REGION Ar2 BY USING HERTZ THEORY
  │
  ▼                                          S13
CALCULATE SPRING CONSTANT Km1 OF FINITE ELEMENT
MODEL 11M IN CONTACT REGION Ar1
  │
  ▼                                          S14
CALCULATE SPRING CONSTANT Km2 OF FINITE ELEMENT
MODEL 12M IN CONTACT REGION Ar2
  │
  ▼                                          S15
CALCULATE SPRING CONSTANT Kb OF FINITE ELEMENT
MODEL 15M BASED ON SPRING CONSTANTS Kh1, Kh2, Km1,
AND Km2
  │
  ▼                                          S16
DETERMINE NATURAL FREQUENCY OF ROTARY MACHINE 100
BY USING SPRING CONSTANT Kb
  │
  ▼
END
```

EP 4 675 247 A1

# Description

## TECHNICAL FIELD

The present disclosure relates to a determination method, a program, and a computing device.

## BACKGROUND ART

PTL 1 (Japanese Patent Laying-Open No. 2019-45472) discloses a device for detecting an abnormality by monitoring the state of a rotary machine. The abnormality occurring in the rotary machine includes an abnormality resulting from sound vibrations. The occurrence of such an abnormality resulting from sound vibrations may be suppressed using the natural frequency of an object for which it is determined whether an abnormality occurs or not.

At the design stage, the rotary machine can be modeled using the finite element method (FEM). By performing an eigenvalue analysis on a finite element model simulating the rotary machine, the natural frequency of the actual rotary machine can be predicted at the design stage.

## CITATION LIST

## PATENT LITERATURE

PTL 1: Japanese Patent Laying-Open No. 2019-45472

## SUMMARY OF INVENTION

## TECHNICAL PROBLEM

As a method of creating a finite element model of a rolling bearing, there is a method of creating a simple finite element model by approximating a rolling element to one spring element. However, in the case of such a simple finite element model obtained by approximation, an error may occur between the spring constant of this simple finite element model and the spring constant of the actual rolling element. An error occurring in the spring constant of the rolling element leads to occurrence of an error also in the spring constant of the entire rotary machine, with the result that an error may occur also in the natural frequency of the entire rotary machine that is obtained by an eigenvalue analysis. The spring constant of the entire rotary machine may be used to determine the characteristics of the rotary machine other than the natural frequency. For example, the rigidity, the stress, and the amount of displacement of the rotary machine are also calculated based on the spring constant of the rotary machine.

When the finite element model of the rolling element is created as a precise model divided by a fine mesh, a model representing the spring constant of the actual rolling element can be created. However, due to creation of a precise model of the rolling element that repeats a nonlinear contact with outer and inner rings, the workload increases and the computational load also increases.

The present disclosure has been made to solve the above-described problems, and an object thereof is to, in a determination method of determining characteristics of a rotary machine including a rolling bearing by using a finite element method, reduce an error occurring in the characteristics of the rotary machine that are determined based on a spring constant, and also suppress a workload applied when determining the characteristics of the rotary machine.

## SOLUTION TO PROBLEM

A determination method in the present disclosure is a determination method of determining a characteristic of a rotary machine having a bearing by using a finite element model. In the determination method, the bearing includes a rolling element, a first bearing ring, and a second bearing ring. The first bearing ring is modeled as a first finite element model. The second bearing ring is modeled as a second finite element model. The rolling element is modeled as a third finite element model. The third finite element model is a finite element model of a one-dimensional elastic body connecting: a first point included in a first contact region contacting the rolling element, the first contact region being on a first raceway surface of the first bearing ring; and a second point included in a second contact region contacting the rolling element, the second contact region being on a second raceway surface of the second bearing ring. A first rigid element having a linear shape passing through the first point is disposed on the first contact region in the first finite element model. A second rigid element having a linear shape passing through the second point is disposed on the second contact region in the second finite element model. The determination method includes: calculating a first spring constant between the rolling element and the first bearing ring by using Hertz theory; calculating a second spring constant between the rolling element and the second bearing ring by using the Hertz theory; calculating a third spring constant of the first finite element model in the first contact region in which the first rigid element is disposed; calculating a fourth spring constant of the second finite element model in the second contact region in which the second rigid element is disposed; calculating a spring constant of the third finite element model based on the first spring constant, the second spring constant, the third spring constant, and the fourth spring constant; and determining at least one of rigidity, a stress, an amount of displacement, or a natural frequency of the rotary machine by using the calculated spring constant of the third finite element model.

A program in the present disclosure is a program that causes a computer to determine a characteristic of a rotary machine having a bearing by using a finite element model. The bearing includes a rolling element, a first bearing ring, and a second bearing ring. The first bearing ring is modeled as a first finite element model. The second bearing ring is modeled as a second finite element model. The rolling element is modeled as a third finite element model. The third finite element model is a finite element model of a one-dimensional elastic body connecting: a first point included in a first contact region contacting the rolling element, the first contact region being on a first raceway surface of the first bearing ring; and a second point included in a second contact region contacting the rolling element, the second contact region being on a second raceway surface of the second bearing ring. A first rigid element having a linear shape passing through the first point is disposed on the first contact region in the first finite element model. A second rigid element having a linear shape passing through the second point is disposed on the second contact region in the second finite element model. The program causes the computer to perform: calculating a first spring constant between the rolling element and the first bearing ring by using Hertz theory; calculating a second spring constant between the rolling element and the second bearing ring by using the Hertz theory; calculating a third spring constant of the first finite element model in the first contact region in which the first rigid element is disposed; calculating a fourth spring constant of the second finite element model in the second contact region in which the second rigid element is disposed; calculating a spring constant of the third finite element model based on the first spring constant, the second spring constant, the third spring constant, and the fourth spring constant; calculating a spring constant of the bearing by using the calculated spring constant of the third finite element model; and determining at least one of rigidity, a stress, an amount of displacement, or a natural frequency of the rotary machine by using the calculated spring constant of the bearing.

A computing device in the present disclosure is a computing device that determines a characteristic of a rotary machine having a bearing by using a finite element model. The computing device includes computing circuitry and a storage. The bearing includes a rolling element, a first bearing ring, and a second bearing ring. The storage stores: a first finite element model obtained by modeling the first bearing ring; a second finite element model obtained by modeling the second bearing ring; and a third finite element model obtained by modeling the rolling element. The third finite element model is a finite element model of a one-dimensional elastic body connecting: a first point included in a first contact region contacting the rolling element, the first contact region being on a first raceway surface of the first bearing ring; and a second point included in a second contact region contacting the rolling element, the second contact region being on a second raceway surface of the second bearing ring. The storage further stores: a first rigid element having a liner shape passing through the first point, the first rigid element being disposed on the first contact region in the first finite element model; and a second rigid element having a linear shape passing through the second point, the second rigid element being disposed on the second contact region in the second finite element model. The computing circuitry is configured to calculate a first spring constant between the rolling element and the first bearing ring by using Hertz theory, calculate a second spring constant between the rolling element and the second bearing ring by using the Hertz theory, calculate a third spring constant of the first finite element model in the first contact region in which the first rigid element is disposed, calculate a fourth spring constant of the second finite element model in the second contact region in which the second rigid element is disposed, calculate a spring constant of the third finite element model based on the first spring constant, the second spring constant, the third spring constant, and the fourth spring constant, and determine at least one of rigidity, a stress, an amount of displacement, or a natural frequency of the rotary machine by using the calculated spring constant of the third finite element model.

ADVANTAGEOUS EFFECTS OF INVENTION

According to the determination method of the present disclosure, by simply modeling the rolling bearing in consideration of the error caused by the finite element method, it is possible to create a model reduced in error between the spring constants while suppressing the workload, and thus, also possible to suppress the workload applied when determining the characteristics of the rotary machine while reducing the error occurring in the characteristics of the rotary machine that are determined based on the spring constant.

BRIEF DESCRIPTION OF DRAWINGS

Fig. 1 is a cross-sectional view of a rotary machine according to the present embodiment.
Fig. 2 is a diagram for illustrating modeling of a rolling bearing in the present embodiment.
Fig. 3 is a diagram for illustrating a contact region between an inner ring and a rolling element in a finite element model.
Fig. 4 is a diagram for illustrating a contact region between an outer ring and the rolling element in the finite element model.
Fig. 5 is a diagram for illustrating a method of determining a spring constant of a model.
Fig. 6 is a diagram for illustrating calculation of a spring constant on a surface of a model simulating the inner ring.
Fig. 7 is a diagram for illustrating calculation of a spring constant on a surface of a model simulating the outer ring.

Fig. 8 is a flowchart illustrating a processing procedure for determining a spring constant of a model of the rolling element in the present embodiment.

Fig. 9 is a cross-sectional view showing a rolling bearing in a first modification.

Fig. 10 is a diagram for illustrating calculation of a spring constant on a surface of a model simulating an inner ring in the first modification.

Fig. 11 is a diagram for illustrating calculation of a spring constant on a surface of a model simulating an outer ring in the first modification.

Fig. 12 is a cross-sectional view showing a rolling bearing in a second modification.

Fig. 13 is a cross-sectional view showing a rolling bearing in a third modification.

Fig. 14 is a cross-sectional view showing a rolling bearing in a fourth modification.

Fig. 15 is a diagram showing a model of an inner ring and a model of an outer ring in the fourth modification.

DESCRIPTION OF EMBODIMENTS

Hereinafter, the present embodiment will be described in detail with reference to the accompanying drawings. The same or corresponding portions in the drawings are denoted by the same reference characters, and the description thereof will not be repeated.

[Embodiments]

Hereinafter, embodiments of the present disclosure will be described with reference to the accompanying drawings. In the drawings referred to below, the same or corresponding portions are denoted by the same reference numerals, and the description thereof will not be repeated.

<Configuration of Rotary Machine 100>

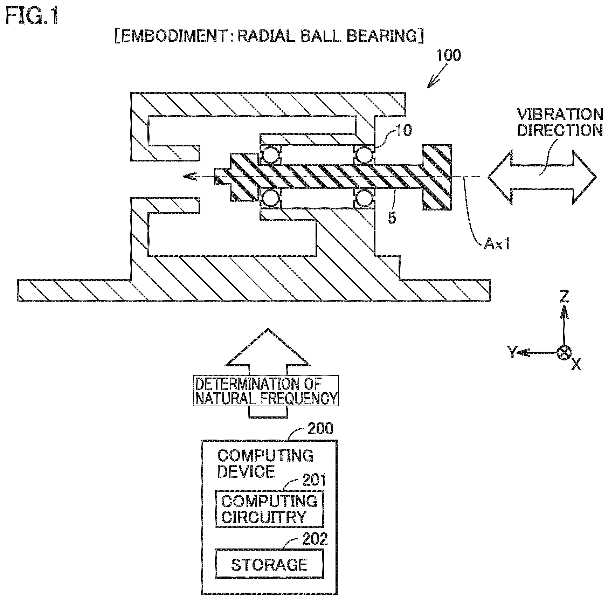

Referring to Fig. 1, the following describes a configuration of a rotary machine 100 to be subjected to a determination method according to the present embodiment. Fig. 1 is a cross-sectional view of rotary machine 100 according to the present embodiment. Rotary machine 100 is shown as a pump in Fig. 1 but may be other machines such as industrial equipment, robots, and household appliances.

As shown in Fig. 1, rotary machine 100 has a rolling bearing 10. Rolling bearing 10 in Fig. 1 is a radial ball bearing. A shaft 5 is rotatably supported in rolling bearing 10. Hereinafter, a rotation axis direction Ax1 of shaft 5 is referred to as a "Y-axis direction". The direction perpendicular to the Y-axis direction is referred to as a "Z-axis direction". The direction perpendicular to the Z-axis direction and the Y-axis direction is referred to as an "X-axis direction". Rotary machine 100 in Fig. 1 is placed on an X-Y plane.

In the present embodiment, a computing device 200 is used to determine the characteristics of rotary machine 100. The characteristics of rotary machine 100 include, for example, rigidity, a stress, an amount of displacement, and a natural frequency of rotary machine 100. The amount of displacement of rotary machine 100 means an amount of displacement occurring in rotary machine 100 receiving a prescribed load. The rigidity and the stress of rotary machine 100 are calculated based on the Young's modulus. Computing device 200 includes computing circuitry 201 and a storage 202. Computing circuitry 201 is constituted, for example, by a central processing unit (CPU), a field programmable gate array (FPGA), a graphics processing unit (GPU), a multi processing unit (MPU), or the like.

Storage 202 provides a storage area in which program codes, work memory, and the like are temporarily stored when computing circuitry 201 executes an arbitrary program. Storage 202 is constituted by a volatile memory such as a dynamic random access memory (DRAM) or a static random access memory (SRAM), or a read only memory (ROM) or a flash memory, and a nonvolatile memory such as a hard disc drive (HDD) or a solid state disk (SSD).

Fig. 1 illustrates an example of determining the natural frequency value with respect to the vibration mode of rotary machine 100 in the X-Y direction. The vibration mode in the X-Y direction is a vibration mode in a direction in which the amount of elastic deformation of shaft 5 is small as compared with the vibration modes in other directions.

Rotary machine 100 is modeled using the finite element method (FEM). The finite element method is a simulation in which an object is divided into a finite number of meshes on which a numerical analysis is performed. Computing device 200 executes a program for providing a simulation by the finite element method.

Hereinafter, a model created by the finite element method may be referred to as a "finite element model". A larger number of meshes constituting the finite element model allows creation of a precise model closer to an actual object, but leads to a larger amount of work for creating the model and also leads to longer computation time. In an example described in the present embodiment, a rolling element 15 of rolling bearing 10 included in rotary machine 100 is simply modeled without creating a precise model therefor.

In the present embodiment, an eigenvalue analysis is performed on the finite element model of rotary machine 100. The eigenvalue analysis is an analysis method of determining the natural frequency of an actual object based on a spring constant and a mass. By setting the spring constant and the mass of rotary machine 100, the eigenvalue analysis is performed in a program that provides a simulation by the finite element method. Since rotary machine 100 includes rolling bearing 10, it is necessary to set the spring constant and the mass of the finite element model of rolling bearing 10.

<Modeling in Finite Element Method>

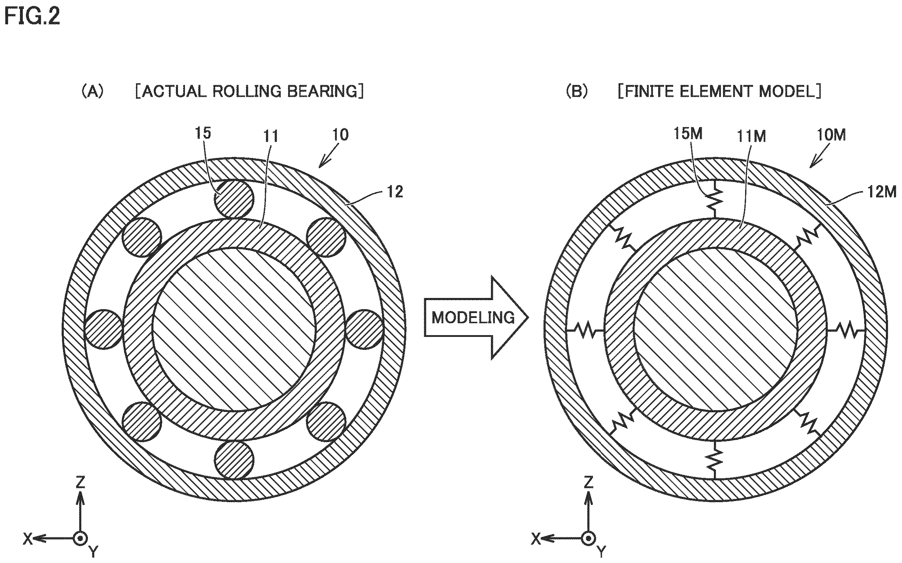

Fig. 2 is a diagram for illustrating modeling of rolling bearing 10 in the present embodiment. Fig. 2(A) shows actual rolling bearing 10 that is not modeled. Rolling bearing 10 includes an outer ring 12, an inner ring 11, and rolling element 15. Rolling element 15 is any one of a plurality of rolling elements included in rolling bearing 10. Although Fig. 1 shows an example in which rolling bearing 10 has a total of eight rolling elements, rolling bearing 10 may have a different number of rolling elements such as 16, 24, or 32 rolling elements in a certain aspect. Inner ring 11 is an example of the "first bearing ring" in the present disclosure. Outer ring 12 is an example of the "second bearing ring" in the present disclosure.

Fig. 2(B) shows a model 10M simulating rolling bearing 10. Model 10M is a model created using a finite element model. Outer ring 12 is modeled as a model 12M. Inner ring 11 is modeled as a model 11M. Model 11M is an example of the "first finite element model" in the present disclosure. Model 12M is an example of the "second finite element model" in the present disclosure.

In the first embodiment, rolling element 15 is modeled as a model 15M. Model 15M is a model simulating one spring having no mass. Model 15M is an element formed of an elastic body having a linear shape with no volume and referred to as a bushing element or a beam element.

In other words, in the present embodiment, rolling element 15 is simply modeled by a finite element model of a one-dimensional elastic body. Thereby, in the present embodiment, rolling element 15 does not have to be precisely modeled as a sphere, so that the workload required for modeling can be reduced. Note that model 15M is an example of the "third finite element model" in the present disclosure.

On the simulation, each of models 11M, 12M, and 15M is set as an elastic body. Thereby, when another model such as a shaft other than models 11M, 12M, and 15M comes into contact with models 11M, 12M, and 15M, models 11M, 12M, and 15M do not restrict the operation of this another model on the simulation.

When rolling element 15 is simply modeled as model 15M as shown in Fig. 2, a spring constant needs to be set for model 15M. The spring constant of rolling element 15 can be calculated from the Hertz theory based on the outer diameter and the mass of actual rolling bearing 10. When the spring constant of rolling element 15 calculated by the Hertz theory is set as the spring constant of model 15M to perform an eigenvalue analysis for the rotary machine, an error may occur in the natural frequency of rotary machine 100.

The inventors of the present disclosure have found that the error of the natural frequency of rotary machine 100 that occurs when the spring constant of rolling element 15 calculated by the Hertz theory is set as the spring constant of model 15M is based on the spring constants occurring on an outer ring surface and an inner ring surface in the finite element model. The following describes a method of setting the spring constant of model 15M in the simulation after removing the influence of the spring constants occurring on the outer and inner ring surfaces.

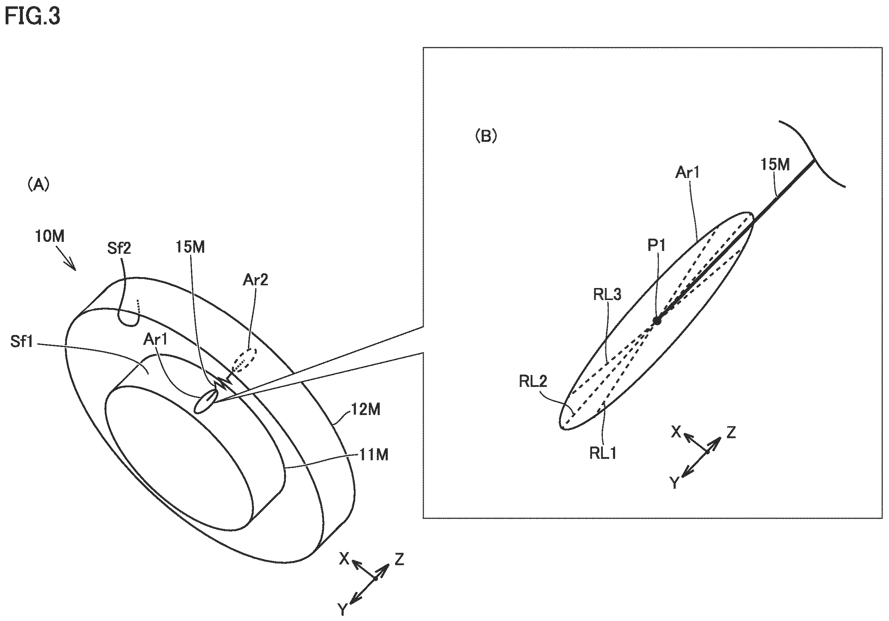

Fig. 3 is a diagram for illustrating a contact region Ar1 between inner ring 11 and rolling element 15 in the finite element model. Fig. 3(A) shows a perspective view of model 10M. In model 11M in Fig. 3, an inner ring raceway surface Sf1 and contact region Ar1 are shown. Inner ring raceway surface Sf1 is a region in which rolling element 15 can contact inner ring 11. Contact region Ar1 indicates a region in which rolling element 15 contacts inner ring 11 on inner ring raceway surface Sf1 when the rotation of rolling bearing 10 is fixed. As shown in Fig. 3, contact region Ar1 has an elliptical shape whose minor radial direction extends in the X-axis direction.

Also in model 12M in Fig. 3, an outer ring raceway surface Sf2 and a contact region Ar2 are shown, similarly to model 11M. Outer ring raceway surface Sf2 is a region in which rolling element 15 can contact outer ring 12. Contact region Ar2 indicates a region in which rolling element 15 contacts outer ring 12 on outer ring raceway surface Sf2 when the rotation of rolling bearing 10 is fixed. Contact region Ar2 has an elliptical shape whose minor radial direction extends in the X-axis direction.

Fig. 3(B) shows contact region Ar1 and an end portion of model 15M on the negative side of the Z-axis in an enlarged manner. The end portion of model 15M is connected to a node P1 that is the center of contact region Ar1 having an elliptical shape. Node P1 is an example of the "first point" in the present disclosure. In the present embodiment, three linear models RL1 to RL3 are disposed in contact region Ar1. Each of models RL1 to RL3 is referred to as a rigid link and defined as a rigid body. In other words, models RL1 to RL3 do not deform even when receiving an external force on the simulation. Each of models RL1 to RL3 passes through node P1.

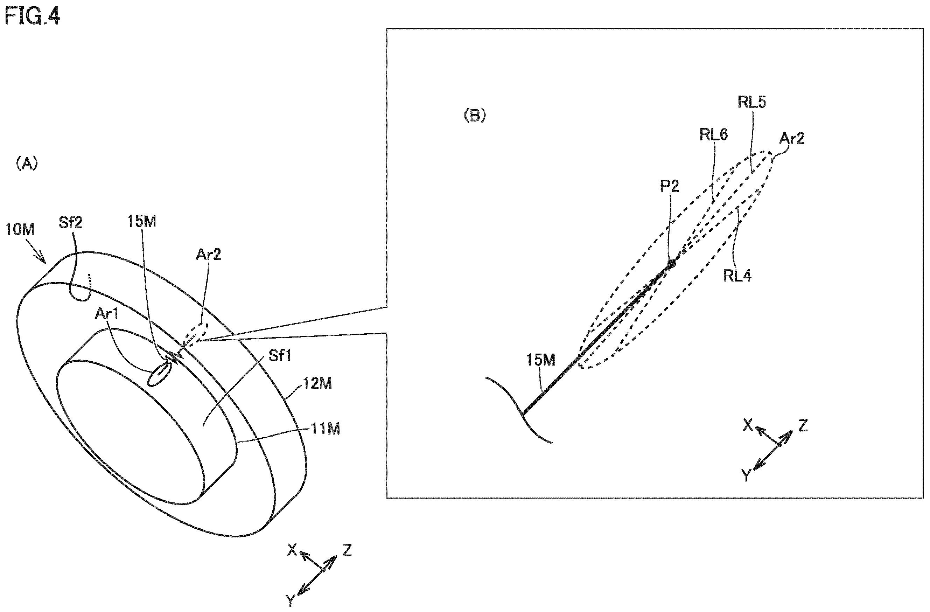

Fig. 4 is a diagram for illustrating contact region Ar2 between outer ring 12 and rolling element 15 in the finite element model. As in Fig. 3(A), Fig. 4(A) shows a perspective view of model 10M. Fig. 4 shows outer ring raceway surface Sf2 and contact region Ar2.

Fig. 4(B) shows contact region Ar2 and an end portion of model 15M on the positive side of the Z-axis in an enlarged manner. The end portion of model 15M is connected to a node P2 of contact region Ar2 having an elliptical shape. In other words, model 15M connects nodes P1 and P2 in Fig. 3. Node P2 is an example of the "second point" in the present disclosure. In the present embodiment, three models RL4 to RL6 each referred to as a rigid link are disposed in contact region Ar2. Each of models RL4 to RL6 has a linear shape passing through node P2 and is defined as a rigid body. Similarly to models RL1 to RL3, models RL4 to RL6 do not deform even when receiving an external force on the simulation. The finite element models shown in Figs. 3 and 4 are stored in storage 202.

<Method of Determining Spring Constant of Model 15M>

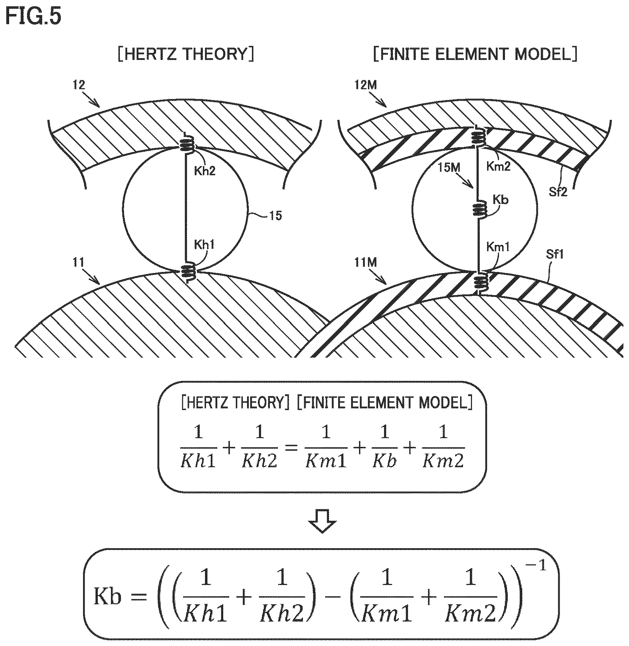

Fig. 5 is a diagram for illustrating a method of determining the spring constant of model 15M. The left side in Fig. 5 shows a diagram illustrating an example of calculation of the spring constant of actual rolling element 15 by the Hertz theory. On the other hand, the right side in Fig. 5 shows a diagram illustrating an example of calculation of the spring constant of model 15M on the simulation.

As described above, the spring constant of actual rolling element 15 can be calculated by using the Hertz theory. As shown in Fig. 5, the spring constant of actual rolling element 15 is obtained as a composite of: a spring constant Kh1 between rolling element 15 and inner ring 11; and a spring constant Kh2 between rolling element 15 and outer ring 12. Thus, the spring constant of rolling element 15 calculated by the Hertz theory is represented by the following expression (1).
[Math. 1]

$$\left(\frac{1}{Kh1} + \frac{1}{Kh2}\right)^{-1} \dots (1)$$

In the Hertz theory, those other than contact regions Ar1 and Ar2 where rolling element 15 contacts inner ring 11 and outer ring 12, respectively, are regarded as rigid bodies. On the other hand, as described above, since model 11M of inner ring 11 and model 12M of outer ring 12 are defined as elastic bodies on the simulation performed using the finite element method, each of inner ring raceway surface Sf1 of model 11M and outer ring raceway surface Sf2 of model 12M is deformed by contact with model 15M. In other words, the simulation produces: a spring constant Km1 caused by deformation of inner ring raceway surface Sf1 of model 11M; and a spring constant Km2 caused by deformation of outer ring raceway surface Sf2 of model 12M.

On the simulation, a spring constant Kb of model 15M needs to be set. However, spring constant Kb of model 15M is combined with spring constant Km1 of inner ring raceway surface Sf1 and spring constant Km2 of outer ring raceway surface Sf2. In other words, as shown in Fig. 5, the composition of the spring constants of model 15 on the simulation of the finite element model is represented by the following expression (1).
[Math. 2]

$$\left(\frac{1}{Km1} + \frac{1}{Kb} + \frac{1}{Km2}\right)^{-1} \dots (2)$$

Therefore, when the spring constant of actual rolling element 15 that is calculated by the Hertz theory is applied to spring constant Kb of model 15M, spring constants Km1 and Km2 need to be removed from the spring constant of actual rolling element 15 that is calculated by the Hertz theory.

In other words, as shown in Fig. 5, spring constant Kb set on the simulation is represented by the following expression (3).
[Math. 3]

$$\left(\left(\frac{1}{Kh1} + \frac{1}{Kh2}\right) - \left(\frac{1}{Km1} + \frac{1}{Km2}\right)\right)^{-1} \dots (3)$$

In this way, the value of the spring constant considering inner ring raceway surface Sf1 and outer ring raceway surface Sf2 and produced on the simulation can be set as spring constant Kb of model 15M. Thus, in the present embodiment, by modeling rolling element 15 included in rolling bearing 10 by approximating this rolling element 15 to one spring element, the workload required for modeling can be reduced, and errors caused by spring constants Km1 and Km2 can be suppressed. Therefore, the workload for determining the natural frequency of rotary machine 100 can also be suppressed while reducing the error in the natural frequency of rotary machine 100 that is calculated by an eigenvalue analysis. Note that spring constant Kh1 is an example of the "first spring constant" in the present disclosure. Further, spring constant Kh2 is an example of the "second spring constant" in the present disclosure. Spring constant Km1 is an example of the "third spring constant" in the present disclosure. Further, spring constant Km2 is an example of the "fourth spring constant" in the present disclosure.

<Method of Calculating Spring Constants Km1 and Km2>

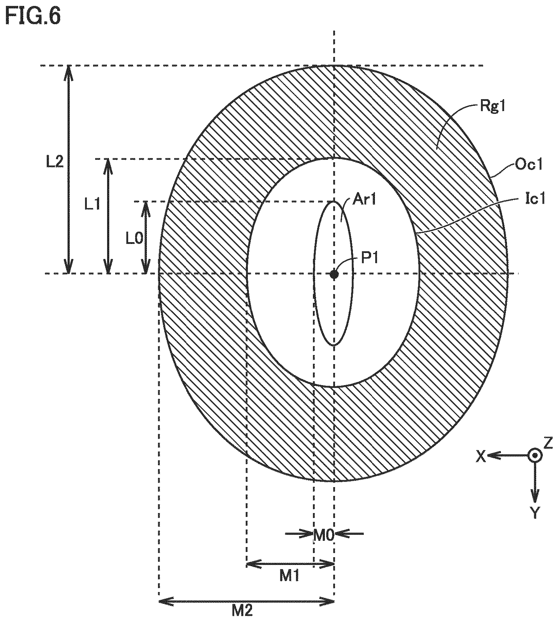

Fig. 6 is a diagram for illustrating calculation of spring constant Km1 in inner ring raceway surface Sf1 of model 11M simulating inner ring 11. Fig. 6 shows contact region Ar1 and node P1 as viewed from the positive side of the Z-axis.

In the present embodiment, the amount of deformation of inner ring raceway surface Sf1 deformed when applying a load to model 10M in the direction of normal to contact region Ar1 is calculated. The direction of normal to contact region Ar1 corresponds to the Z-axis direction. Computing device 200 calculates the amount of deformation of inner ring raceway surface Sf1 by comparing contact region Ar1 with a reference region Rg1.

On the simulation, contact region Ar1 of inner ring raceway surface Sf1 receives a load and thus sinks toward the negative side of the Z-axis. In other words, the position of contact region Ar1 in the Z-axis direction is different from the position, in the Z-axis direction, of a region around contact region Ar1 in inner ring raceway surface Sf1. As the difference is larger, the load sinks more, and therefore, the rigidity of model 11M is lower, i.e., spring constant Km1 is larger. On the other hand, as the difference is smaller, the load sinks less, and therefore, the rigidity of model 11M is higher, i.e., spring constant Km1 is smaller.

Due to sinking of contact region Ar1, the area around contact region Ar1 also similarly sinks. The region closer to contact region Ar1 in inner ring raceway surface Sf1 is pulled more toward contact region Ar1 and sinks deeper, so that the amount of deformation in the negative direction of the Z-axis is larger. On the other hand, the region farther away from contact region Ar1 is less influenced by sinking of contact region Ar1, so that the amount of deformation in the negative direction of the Z-axis is smaller.

Thus, if the position of reference region Rg1 to be compared with contact region Ar1 is not appropriately determined when calculating spring constant Km1, the calculated spring constant Km1 becomes inappropriately smaller or larger. Referring to Fig. 6, the appropriate position of reference region Rg1 determined by an experiment will be described.

As shown in Fig. 6, reference region Rg1 is a hatched portion surrounding contact region Ar1. More specifically, reference region Rg1 is located outside an inner ellipse Ic1 and inside an outer ellipse Oc1 on inner ring raceway surface Sf1. As described above, contact region Ar1 has an elliptical shape centered on node P1. The major radius of contact region Ar1 is a distance L0. The minor radius of contact region Ar1 is a distance M0.

The elliptical shapes of inner ellipse Ic1, outer ellipse Oc1, and contact region Ar1 share the same node P1. In other words, the center points of the elliptical shapes of inner ellipse Ic1, outer ellipse Oc1, and contact region Ar1 coincide with one another when viewed from the positive side of the Z-axis. The major radius of inner ellipse Ic1 is a distance L1. The inner radius of inner ellipse Ic1 is a distance M1. The major radius of outer ellipse Oc1 is a distance L2. The inner radius of outer ellipse Oc1 is a distance M2.

Distance M1 is four times as long as distance M0. Distance M2 is eight times as long as distance M0. Distance L1 is 1.5 times as long as distance L0. Distance L2 is four times as long as distance L0.

As described above, in the present embodiment, spring constant Km1 is calculated based on the difference on the positive side of the Z-axis between the point within contact region Ar1 and the point in reference region Rg1. This prevents spring constant Km1 from becoming inappropriately larger or smaller.

As described with reference to Fig. 3, models RL1 to RL3 as rigid links are disposed inside contact region Ar1. Thus, load is uniformly applied to the inside of contact region Ar1 of inner ring raceway surface Sf1. In other words, all the points on contact region Ar1 of inner ring raceway surface Sf1 are located at the same positions in the Z-axis direction.

Reference region Rg1 should only be within a region represented by oblique lines in Fig. 6. In other words, outer ellipse Oc1 may be smaller than the ellipse shown in Fig. 6, and inner ellipse Ic1 may be larger than the ellipse shown in Fig. 6. In other words, if distance M2 is longer than distance M1 and distance L2 is longer than distance L1, then, distance M1 may be longer than four times as long as distance M0, distance M2 may be shorter than eight times as long as distance M0, distance L1 may be longer than 1.5 times as long as distance L0, and distance L2 may be shorter than four times as long as distance L0. Note that inner ellipse Ic1 is an example of the "first ellipse" in the present disclosure. Outer ellipse Oc1 is an example of the "second ellipse" in the present disclosure.

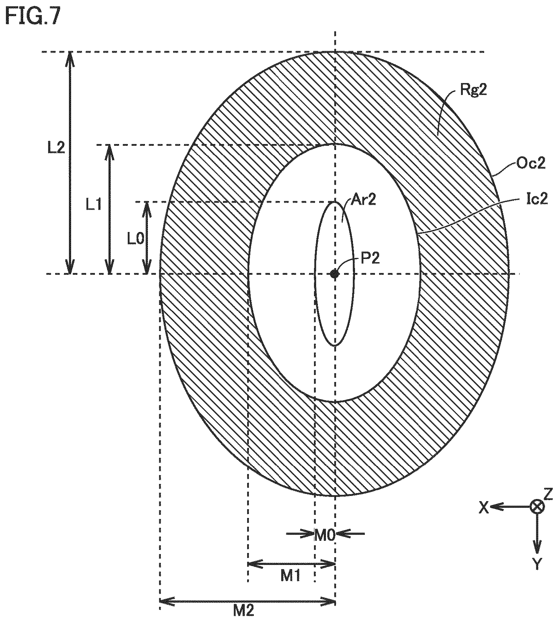

Fig. 7 is a diagram for illustrating calculation of spring constant Km2 in outer ring raceway surface Sf2 of model 12M simulating outer ring 12. Also in outer ring raceway surface Sf2, spring constant Km2 is calculated as in inner ring raceway surface Sf1. In other words, also in model 12M, a reference region Rg2 is set as shown in Fig. 7. Reference region Rg2 is represented by oblique lines between an outer ellipse Oc2 and an inner ellipse Ic2. The dimensional relation between contact region Ar2 and reference region Rg2 is the same as the relation between contact region Ar1 and reference region Rg1.

As in Fig. 6, in Fig. 7, when the major radius of contact region Ar2 is distance L0 and the minor radius of contact region Ar2 is distance M0, then, the major radius of inner ellipse Ic2 is distance L1, the inner radius of inner ellipse Ic2 is distance M1, the major radius of outer ellipse Oc2 is distance L2, and the inner radius of outer ellipse Oc2 is distance M2. At this time, also in Fig. 7, distance M1 is four times as long as distance M0, as in Fig. 6. Distance M2 is eight times as long as distance M0. Distance L1 is 1.5 times as long as distance L0. Distance L2 is four times as long as distance L0. This also prevents spring constant Km2 from becoming unnecessarily larger or smaller. Note that inner ellipse Ic2 is an example of the "third ellipse" in the present disclosure. Outer ellipse Oc2 is an example of the "fourth ellipse" in the present disclosure.

Similarly to reference region Rg1, reference region Rg2 should only be within a region represented by oblique lines in Fig. 7. In other words, outer ellipse Oc2 may be smaller than the ellipse shown in Fig. 7, and inner ellipse Ic2 may be larger than the ellipse shown in Fig. 7. In other words, if distance M2 is longer than distance M1 and distance L2 is longer than distance L1, then, distance M1 may be longer than four times as long as distance M0, distance M2 may be shorter than eight times as long as distance M0, distance L1 may be longer than 1.5 times as long as distance L0, and distance L2 may be shorter than four times as long as distance L0.

<Processing Procedure>

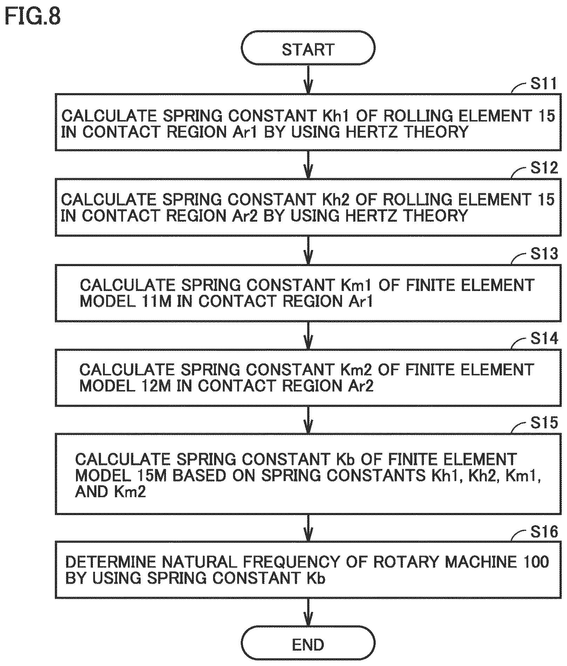

Fig. 8 is a flowchart illustrating a processing procedure for determining spring constant Kb of model 15M of rolling element 15 in the present embodiment. The flowchart in Fig. 8 is stored in storage 202 as a program. Computing circuitry 201 of computing device 200 executes the program.

Computing circuitry 201 calculates spring constant Kh1 of rolling element 15 in contact region Ar1 by using the Hertz theory (step S11). Specifically, computing circuitry 201 calculates spring constant Kh1 of rolling element 15 based on the data indicating the outer diameter and the mass of rolling element 15 that have been input from a designer. Computing circuitry 201 calculates spring constant Kh2 of rolling element 15 in contact region Ar2 by using the Hertz theory (step S12).

Computing circuitry 201 calculates spring constant Km1 of model 11M in contact region Ar1 (step S13). Specifically, computing circuitry 201 applies a load to model 10M on the simulation to acquire the amount of displacement described with reference to Fig. 6. The amount of displacement described with reference to Fig. 6 is a distance between a point within reference region Rg1 and a point within contact region Ar1 in the Z-axis direction. Computing circuitry 201 calculates spring constant Km1 based on the amount of displacement. Storage 202 stores a database indicating the relation among the magnitude of the load, the amount of displacement, and spring constant Km1. Computing circuitry 201 calculates spring constant Km2 of model 12M in contact region Ar2 (step S14).

Computing circuitry 201 calculates spring constant Kb of model 15M based on spring constant Kh1 calculated in step S11, spring constant Kh2 calculated in step S12, spring constant Km1 calculated in step S13, and spring constant Km2 calculated in step S14 (step S15). Specifically, computing circuitry 201 derives Kb by using the expression described with reference to Fig. 5.

Computing circuitry 201 calculates the natural frequency of rotary machine 100 by using spring constant Kb calculated in step S15 (step S16). Specifically, computing device 200 calculates the spring constant of the entire rotary machine 100 from the spring constant of the entire rolling bearing 10 including spring constant Kb and the spring constants of the components other than rolling bearing 10 included in rotary machine 100. The spring constants of the components other than rolling bearing 10 included in rotary machine 100 are input to computing device 200 by the designer. Similarly, the mass of the entire rotary machine 100 is input to computing device 200 by the designer. From the spring constant and the mass of the entire rotary machine 100, computing device 200 calculates the natural frequency of rotary machine 100 based on the eigenvalue analysis.

As described above, in the present embodiment, spring constant Kb of model 15M obtained by approximating rolling element 15 is determined in consideration of spring constants Km1 and Km2 that have been caused by using the finite element method. Thereby, in the present embodiment, by modeling rolling element 15 included in rolling bearing 10 by approximating this rolling element 15 to one spring element, the workload required for modeling rolling bearing 10 can be reduced and the error can be reduced. In other words, in the present embodiment, the workload for determining the natural frequency of rotary machine 100 can also be suppressed while reducing the error in the determined natural frequency. Further, computing device 200 may calculate the Young's modulus from the spring constant of the entire rotary machine 100 to thereby calculate the rigidity and the stress of the entire rotary machine 100. Further, based on the calculated rigidity and stress of the entire rotary machine 100, computing device 200 may calculate the amount of displacement of rotary machine 100 that occurs when rotary machine 100 receives a prescribed load. Thereby, in the present embodiment, the workload required for determining the characteristics of rotary machine 100 can be suppressed while reducing the error occurring in the characteristics of rotary machine 100 that are determined based on the spring constant.

<First Modification>

In the example described in the present embodiment, rolling bearing 10 is a radial ball bearing. In the following description in the first modification, a radial roller bearing is applied.

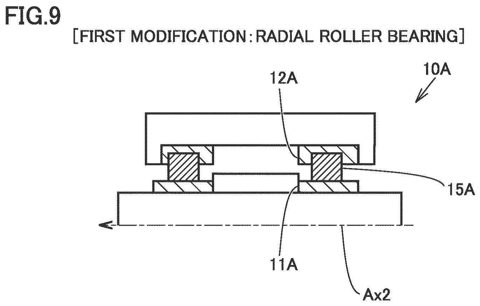

Fig. 9 shows a cross-sectional view of a rolling bearing 10A in the first modification. The configuration in the first modification is the same as that in the present embodiment except for the type of rolling bearing 10A in that rolling bearing 10A is not a radial ball bearing but a radial roller bearing. In the first modification, the description of the same configuration as that of the present embodiment will not be repeated.

Fig. 9 shows rolling bearing 10A that is a radial roller bearing having a rotation axis Ax2. Rolling bearing 10A includes an outer ring 12A, an inner ring 11A, and a rolling element 15A. Note that inner ring 11A is an example of the "first bearing ring" in the present disclosure. Outer ring 12A is an example of the "second bearing ring" in the present disclosure. Also in the first modification, computing device 200 determines the spring constant of the model obtained by approximating rolling element 15A in consideration of spring constants Km1 and Km2.

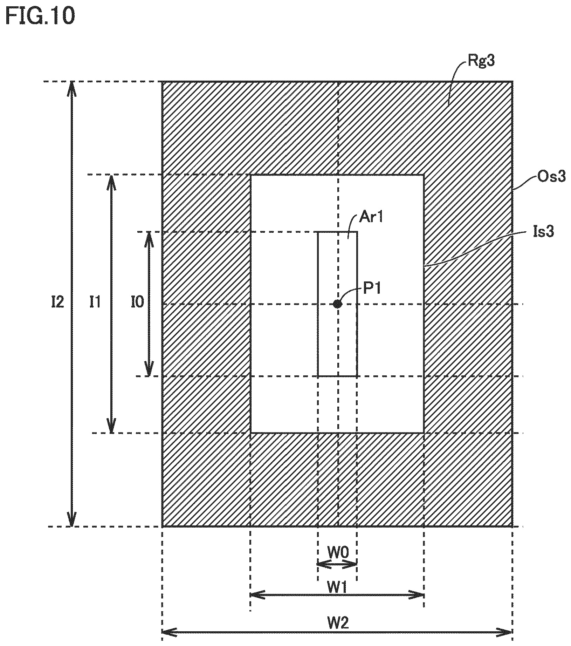

Fig. 10 is a diagram for illustrating calculation of spring constant Km1 in inner ring raceway surface Sf1 of model 11M simulating inner ring 11 in the first modification. Fig. 10 shows contact region Ar1 and node P1 as viewed from the positive side of the Z-axis. In the first modification, since rolling bearing 10A is a radial roller bearing, contact region Ar1 has a rectangular shape. Thus, a reference region Rg3 in the first modification also has a rectangular shape. Reference region Rg3 is located between an outer rectangle Os3 and an inner rectangle Is3.

In the first modification, the length of the long side of contact region Ar1 is a distance I0. The length of the short side of contact region Ar1 is a distance W0. The length of the long side of inner rectangle Is3 is a distance I1. The length of the short side of inner rectangle Is3 is a distance W1. The length of the long side of outer rectangle Os3 is a distance I2. The length of the short side of outer rectangle Os3 is a distance W2.

Distance I1 is 1.1 times as long as distance I0. Distance I2 is twice as long as distance I0. Distance W1 is four times as long as distance W0. Distance W2 is eight times as long as distance W0.

As described above, also in the first modification, spring constant Km1 is calculated based on the difference on the positive side of the Z-axis between the point within rectangular contact region Ar1 and the point within rectangular reference region Rg3. This prevents spring constant Km1 from becoming unnecessarily larger or smaller also in the first modification. Inner rectangle Is3 is an example of the "first rectangle" in the present disclosure. Outer rectangle Os3 is an example of the "second rectangle" in the present disclosure.

Similarly to reference region Rg1, reference region Rg3 should only be within a region represented by oblique lines in Fig. 10. In other words, outer rectangle Os3 may be smaller than the rectangle shown in Fig. 10, and inner rectangle Is3 may be larger than the rectangle shown in Fig. 10. In other words, in Fig. 10, if distance W2 is longer than distance W1 and distance I2 is longer than distance I1, then, distance W1 may be longer than four times as long as distance W0, distance W2 may be shorter than eight times as long as distance W0, distance I1 may be longer than 1.1 times as long as distance I0, and distance I2 may be shorter than twice as long as distance I0.

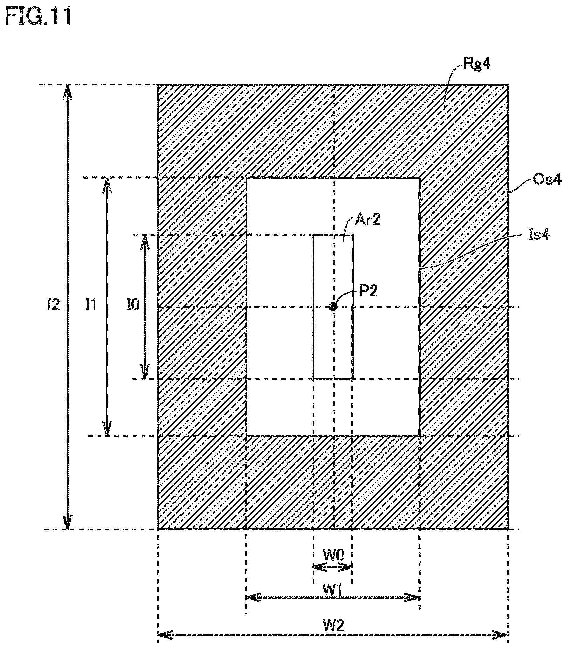

Fig. 11 is a diagram for illustrating calculation of spring constant Km2 in outer ring raceway surface Sf2 of model 12M simulating outer ring 12 in the first modification. Also in Fig. 11, a reference region Rg4 is set. Reference region Rg4 is represented by oblique lines between an outer rectangle Os4 and an inner rectangle Is4. In the first modification, contact region Ar2 has the same size as that of contact region Ar1 in the first modification. In other words, the length of the long side of contact region Ar2 is distance I0. The length of the short side of contact region Ar2 is distance W0.

As in Fig. 10, the length of the short side of inner rectangle Is4 is distance I1. The length of the long side of inner rectangle Is4 is distance W1. The length of the short side of outer rectangle Os4 is distance I2. The length of the long side of outer rectangle Os4 is distance W2.

Also in Fig. 7, distance I1 is 1.1 times as long as distance I0, as in Fig. 6. Distance I2 is twice as long as distance I0. Distance W1 is four times as long as distance W0. Distance W2 is eight times as long as distance W0. This also prevents spring constant Km2 from becoming unnecessarily larger or smaller. Note that inner rectangle Is4 is an example of the "third rectangle" in the present disclosure. Outer rectangle Os4 is an example of the "fourth rectangle" in the present disclosure.

Similarly to reference region Rg1, reference region Rg4 should only be within a region represented by oblique lines in Fig. 11. In other words, outer rectangle Os4 may be smaller than the rectangle shown in Fig. 11, and inner rectangle Is4 may be larger than the rectangle shown in Fig. 11. In other words, in Fig. 11, if distance W2 is longer than distance W1 and distance I2 is longer than distance I1, then, distance W1 may be longer than four times as long as distance W0, distance W2 may be shorter than eight times as long as distance W0, distance I1 may be longer than 1.1 times as long as distance I0, and distance I2 may be shorter than twice as long as distance I0.

Also in the first modification to which radial roller bearing 10A is applied in this way, as in the present embodiment, by modeling rolling element 15 included in rolling bearing 10A by approximating this rolling element 15 to one spring element, the workload required for modeling can be reduced and the error resulting from spring constants Km1 and Km2 can be reduced. In other words, also in the first modification, the workload for determining the natural frequency of rotary machine 100 can also be suppressed while reducing the error in the natural frequency of rotary machine 100 to be determined.

<Second Modification>

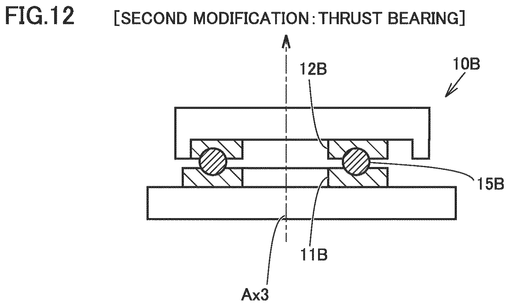

In the example described in the present embodiment, rolling bearing 10 is a radial ball bearing. In an example described in the second modification, a thrust bearing is applied. Fig. 12 shows a cross-sectional view of a rolling bearing 10B in the second modification. The configuration in the second modification is the same as that in the present embodiment except for the type of rolling bearing 10B in that rolling bearing 10B is not a radial ball bearing but a thrust bearing. In the second modification, the description of the same configuration as that of the present embodiment will not be repeated.

Fig. 12 shows rolling bearing 10B that is a thrust bearing having a rotation axis Ax3. Rolling bearing 10B includes an outer ring 12B, an inner ring 11B, and a rolling element 15B. Note that inner ring 11B is an example of the "first bearing ring" in the present disclosure. Outer ring 12B is an example of the "second bearing ring" in the present disclosure. Also in the second modification, computing device 200 determines the spring constant of the model obtained by approximating rolling element 15B in consideration of spring constants Km1 and Km2.

Also in the second modification to which the thrust bearing is applied in this way, as in the present embodiment, by modeling rolling element 15B included in rolling bearing 10B by approximating this rolling element 15B to one spring element, the workload required for modeling can be reduced and the error resulting from spring constants Km1 and Km2 can be reduced. In other words, also in the second modification, the workload for determining the natural frequency of rotary machine 100 can also be suppressed while reducing the error in the natural frequency of rotary machine 100 to be determined.

<Third Modification>

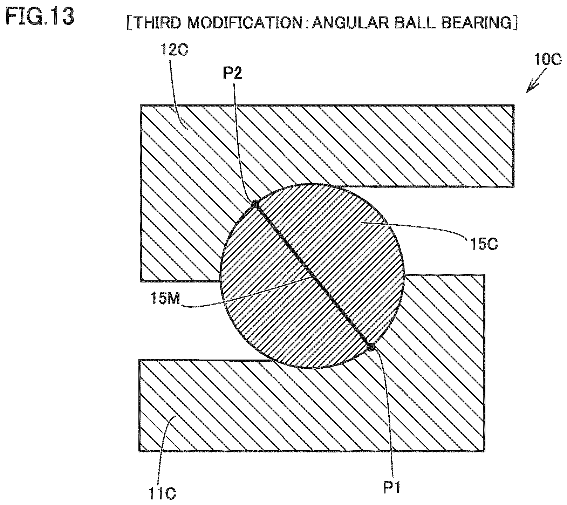

In the example described in the present embodiment, rolling bearing 10 is a radial ball bearing. In an example described in the third modification, an angular ball bearing is applied. Fig. 13 shows a cross-sectional view of a rolling bearing 10C in the third modification. The configuration in the third modification is the same as that in the present embodiment except for the type of rolling bearing 10B in that rolling bearing 10B is not a radial ball bearing but an angular ball bearing. In the third modification, the description of the same configuration as that of the present embodiment will not be repeated.

Fig. 13 shows rolling bearing 10C that is an angular ball bearing. Rolling bearing 10C includes an outer ring 12C, an inner ring 11C, and a rolling element 15C. Note that inner ring 11C is an example of the "first bearing ring" in the present disclosure. Outer ring 12C is an example of the "second bearing ring" in the present disclosure. Also in the third modification, computing device 200 determines the spring constant of the model obtained by approximating rolling element 15C in consideration of spring constants Km1 and Km2.

Fig. 13 shows model 15M obtained by modeling rolling element 15C in the state in which model 15M is superimposed on rolling element 15C. Further, Fig. 13 shows: node P1 connecting model 15M and model 11M obtained by modeling inner ring 11C; and node P2 connecting model 15M and model 12M obtained by modeling outer ring 12C.

Also in the third modification to which an angular ball bearing is applied in this way, as in the present embodiment, by modeling rolling element 15C included in rolling bearing 10C by approximating this rolling element 15C to one spring element, the workload required for modeling can be reduced and the error resulting from spring constants Km1 and Km2 can be reduced. In other words, also in the third modification, the workload for determining the natural frequency of rotary machine 100 can also be suppressed while reducing the error in the natural frequency of rotary machine 100 to be determined.

<Fourth Modification>

In the example described in the third modification, an angular ball bearing is applied. In an example described in the fourth modification, an angular ball bearing is applied and nodes P1 and P2 are disposed at positions different from those in the third modification.

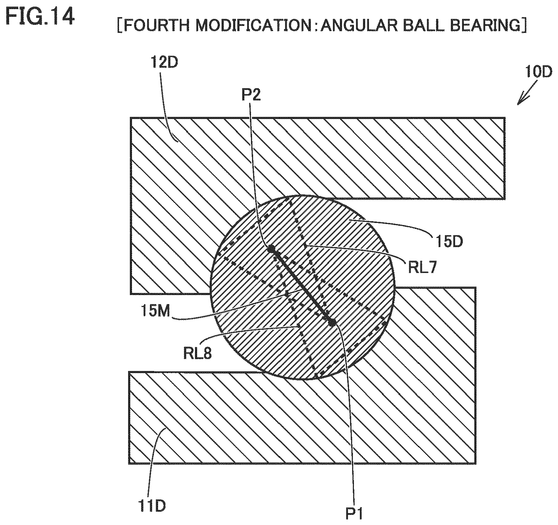

Fig. 14 shows a cross-sectional view of a rolling bearing 10D in the fourth modification. In the fourth modification, the description of the same configuration as that of the third modification will not be repeated. In the fourth modification, an inner ring 11D is an example of the "first bearing ring" in the present disclosure. An outer ring 12D is an example of the "second bearing ring" in the present disclosure.

Fig. 14 shows model 15M obtained by modeling a rolling element 15D in the fourth modification in the state in which model 15M is superimposed on rolling element 15D. As shown in Fig. 14, in the fourth modification, node P1 is not disposed on the inner ring raceway surface. Similarly, node P2 is also not disposed on the outer ring raceway surface. Each of nodes P1 and P2 is located at the center of the groove curvature radius of the corresponding one of the respective bearing rings. Thereby, since the line connecting nodes P1 and P2 coincides with the line connecting the contact positions at the inner and outer rings, calculation of each contact position is not required.

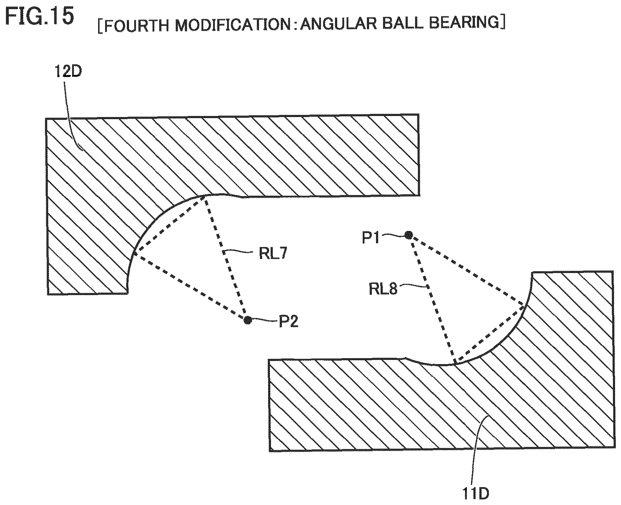

Fig. 15 is a diagram showing a model of inner ring 11D and a model of outer ring 12D in model 10D in the fourth modification. As shown in Fig. 15, node P1 is supported by a model RL7 that is a rigid link having a triangular shape. Model RL7 is disposed between outer ring 12D and node P1. Node P2 is supported by a model RL8 that is a rigid link having a triangular shape. Model RL8 is disposed between inner ring 11D and node P2.

Referring back to Fig. 14, model 15M that is a one-dimensional elastic body obtained by modeling rolling element 15D is disposed between nodes P1 and P2. Thereby, the natural frequency can be determined without calculating the position of contact between the ball and the bearing ring.

Also in the fourth modification in which nodes P1 and P2 are not disposed on the raceway surface in this way, as in the present embodiment, by modeling rolling element 15D included in rolling bearing 10D by approximating this rolling element 15D to one spring element, the workload required for modeling can be reduced, and the error resulting from spring constants Km1 and Km2 can be reduced. In other words, also in the fourth modification, the workload for determining the natural frequency of rotary machine 100 can also be suppressed while reducing the error in the natural frequency of rotary machine 100 to be determined.

<Summary>

The above-described method of determining the characteristics of the rotary machine has the following features.

(Clause 1) A determination method of determining a characteristic of a rotary machine having a bearing by using a finite element model. The bearing includes a rolling element, a first bearing ring, and a second bearing ring, the first bearing ring is modeled as a first finite element model, the second bearing ring is modeled as a second finite element model, the rolling element is modeled as a third finite element model, the third finite element model is a finite element model of a one-dimensional elastic body connecting: a first point included in a first contact region contacting the rolling element, the first contact region being on a first raceway surface of the first bearing ring; and a second point included in a second contact region contacting the rolling element, the second contact region being on a second raceway surface of the second bearing ring, a first rigid element having a linear shape passing through the first point is disposed on the first contact region in the first finite element model, and a second rigid element having a linear shape passing through the second point is disposed on the second contact region in the second finite element model. The determination method includes: calculating a first spring constant between the rolling element and the first bearing ring by using Hertz theory; calculating a second spring constant between the rolling element and the second bearing ring by using the Hertz theory; calculating a third spring constant of the first finite element model in the first contact region in which the first rigid element is disposed; calculating a fourth spring constant of the second finite element model in the second contact region in which the second rigid element is disposed; calculating a spring constant of the third finite element model based on the first spring constant, the second spring constant, the third spring constant, and the fourth spring constant; and determining at least one of rigidity, a stress, an amount of displacement, or a natural frequency of the rotary machine by using the calculated spring constant of the third finite element model.

(Clause 2) In the determination method according to Clause 1, the calculating a third spring constant includes calculating the third spring constant based on a displacement of a distance between the first contact region and a first reference region, the first reference region being located on the first raceway surface and different from the first contact region, the displacement occurring when a load is applied to the first finite element model in a direction of normal to the first contact region.

(Clause 3) In the determination method according to Clause 2, the rolling element is a ball, the first contact region has an elliptical shape when viewed in a direction of normal to the first raceway surface, the first reference region is located outside a first ellipse on the first raceway surface and inside a second ellipse on the first raceway surface, center points of the first contact region, the first ellipse, and the second ellipse coincide with one another when the first raceway surface is viewed in a direction of normal, a minor radius of the second ellipse is longer than a minor radius of the first ellipse, a major radius of the second ellipse is longer than a major radius of the first ellipse, the minor radius of the first ellipse is longer than four times as long as a minor radius of the first contact region, the minor radius of the second ellipse is shorter than eight times as long as the minor radius of the first contact region, the major radius of the first ellipse is longer than 1.5 times as long as a major radius of the first contact region, and the major radius of the second ellipse is shorter than four times as long as the major radius of the first contact region.

(Clause 4) In the determination method according to Clause 2, the rolling element is a roller, the first contact region has a rectangular shape when the first raceway surface is viewed in a direction of normal, the first reference region is located outside a first rectangle on the first contact region and inside a second rectangle on the first contact region, center points of the first contact region, the first rectangle, and the second rectangle coincide with one another when the first raceway surface is viewed in a direction of normal, a short side of the second rectangle is longer than a short side of the first rectangle, a long side of the second rectangle is longer than a long side of the first rectangle, the short side of the first rectangle is longer than four times as long as a short side of the first contact region, the short side of the second rectangle is shorter than eight times as long as the short side of the first contact region, the long side of the first rectangle is longer than 1.1 times as long as a long side of the first contact region, and the long side of the second rectangle is shorter than twice as long as the long side of the first contact region.

(Clause 5) In the determination method according to Clauses 1 to 4, the calculating a fourth spring constant includes calculating the fourth spring constant based on a displacement of a distance between the second contact region and a second reference region, the second reference region being located on the second raceway surface and different from the second contact region, the displacement occurring when a load is applied to the second finite element model in a direction of normal to the second contact region.

(Clause 6) In the determination method according to Clause 5, the rolling element is a ball, the second contact region has an elliptical shape when viewed in a direction of normal to the second raceway surface, the second reference region is located outside a third ellipse on the second raceway surface and inside a fourth ellipse on the second raceway surface, center points of the second contact region, the third ellipse, and the fourth ellipse are disposed at positions coinciding with one another when the second raceway surface is viewed in a direction of normal, a minor radius of the fourth ellipse is longer than a minor radius of the third ellipse, a major radius of the fourth ellipse is longer than a major radius of the third ellipse, the minor radius of the third ellipse is longer than four times as long as a minor radius of the second contact region, the minor radius of the fourth ellipse is shorter than eight times as long as the minor radius of the second contact region, the major radius of the third ellipse is longer than 1.5 times as long as a major radius of the second contact region, and the major radius of the fourth ellipse is shorter than four times as long as the major radius of the second contact region.

(Clause 7) In the determination method according to Clause 5, the rolling element is a roller, the second contact region has a rectangular shape when the second raceway surface is viewed in a direction of normal, the second reference region is located outside a third rectangle on the second contact region and inside a fourth rectangle on the second contact region, center points of the second contact region, the third rectangle, and the fourth rectangle are disposed at positions coinciding with one another when the second raceway surface is viewed in a direction of normal, a short side of the fourth rectangle is longer than a short side of the third rectangle, a long side of the fourth rectangle is longer than a long side of the third rectangle, the short side of the third rectangle is longer than four times as long as a short side of the second contact region, the short side of the fourth rectangle is shorter than eight times as long as the short side of the second contact region, the long side of the third rectangle is longer than 1.1 times as long as a long side of the second contact region, and the long side of the fourth rectangle is shorter than twice as long as the long side of the second contact region.

(Clause 8) In the determination method according to any one of Clauses 1 to 7, the first spring constant is defined as Kh1, the second spring constant is defined as Kh2, the third spring constant is defined as Km1, the fourth spring constant is defined as Km2, and the spring constant of the third finite element model is defined as Kb, and in the calculating a spring constant of the third finite element model, the spring constant of the third finite element model is calculated according to a relational expression below:
[Math. 3]

$$\left( \left( \frac{1}{Kh1} + \frac{1}{Kh2} \right) - \left( \frac{1}{Km1} + \frac{1}{Km2} \right) \right)^{-1} \dots (3).$$

(Clause 9) A program causes a computer to determine a characteristic of a rotary machine having a bearing by using a finite element model. The bearing includes a rolling element, a first bearing ring, and a second bearing ring, the first bearing ring is modeled as a first finite element model, the second bearing ring is modeled as a second finite element model, the rolling element is modeled as a third finite element model, the third finite element model is a finite element model of a one-dimensional elastic body connecting: a first point included in a first contact region contacting the rolling element, the first contact region being on a first raceway surface of the first bearing ring; and a second point included in a second contact region contacting the rolling element, the second contact region being on a second raceway surface of the second bearing ring, a first rigid element having a linear shape passing through the first point is disposed on the first contact region in the first finite element model, and a second rigid element having a linear shape passing through the second point is disposed on the second contact region in the second finite element model. The program causes the computer to perform: calculating a first spring constant between the rolling element and the first bearing ring by using Hertz theory; calculating a second spring constant between the rolling element and the second bearing ring by using the Hertz theory; calculating a third spring constant of the first finite element model in the first contact region in which the first rigid element is disposed; calculating a fourth spring constant of the second finite element model in the second contact region in which the second rigid element is disposed; calculating a spring constant of the third finite element model based on the first spring constant, the second spring constant, the third spring constant, and the fourth spring constant; calculating a spring constant of the bearing by using the calculated spring constant of the third finite element model; and determining at least one of rigidity, a stress, an amount of displacement, or a natural frequency of the rotary machine by using the calculated spring constant of the bearing.

(Clause 10) A computing device determines a characteristic of a rotary machine having a bearing by using a finite element model. The computing device includes computing circuitry and a storage. The bearing includes a rolling element, a first bearing ring, and a second bearing ring, the storage stores: a first finite element model obtained by modeling the first bearing ring; a second finite element model obtained by modeling the second bearing ring; and a third finite element model obtained by modeling the rolling element, the third finite element model is a finite element model of a one-dimensional elastic body connecting: a first point included in a first contact region contacting the rolling element, the first contact region being on a first raceway surface of the first bearing ring; and a second point included in a second contact region contacting the rolling element, the second contact region being on a second raceway surface of the second bearing ring, and the storage further stores: a first rigid element having a liner shape passing through the first point, the first rigid element being disposed on the first contact region in the first finite element model; and a second rigid element having a linear shape passing through the second point, the second rigid element being disposed on the second contact region in the second finite element model. The computing circuitry is configured to calculate a first spring constant between the rolling element and the first bearing ring by using Hertz theory, calculate a second spring constant between the rolling element and the second bearing ring by using the Hertz theory, calculate a third spring constant of the first finite element model in the first contact region in which the first rigid element is disposed, calculate a fourth spring constant of the second finite element model in the second contact region in which the second rigid element is disposed, calculate a spring constant of the third finite element model based on the first spring constant, the second spring constant, the third spring constant, and the fourth spring constant, and determine at least one of rigidity, a stress, an amount of displacement, or a natural frequency of the rotary machine by using the calculated spring constant of the third finite element model.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

REFERENCE SIGNS LIST

5 shaft, 10, 10A to 10D rolling bearing, 10M, 11M, 12M, 15M, RL1 to RL8 model, 11, 11A to 11D inner ring, 12, 12A to 12D outer ring, 100, 1000 rotary machine, 200 computing device, 201 computing circuitry, 202 storage, 15, 15A to 15D rolling element, Ar1, Ar2 contact region, Ax1 rotation axis direction, I0 to I2, L0 to L2, M0 to M2, W0 to W2 distance, Ic1, Ic2 inner ellipse, Is3, Is4 inner rectangle, Oc1, Oc2 outer ellipse, Os3, Os4 outer rectangle, Kb, Kh1, Kh2, Km1, Km2 spring constant, P1, P2 node, Rg1 to Rg4 reference region, Sf1 inner ring raceway surface, Sf2 outer ring raceway surface.

**Claims**

1. A determination method of determining a characteristic of a rotary machine having a bearing by using a finite element model, wherein

   the bearing includes a rolling element, a first bearing ring, and a second bearing ring,
   the first bearing ring is modeled as a first finite element model,
   the second bearing ring is modeled as a second finite element model,
   the rolling element is modeled as a third finite element model,
   the third finite element model is a finite element model of a one-dimensional elastic body connecting

      a first point included in a first contact region contacting the rolling element, the first contact region being on a first raceway surface of the first bearing ring, and
      a second point included in a second contact region contacting the rolling element, the second contact region being on a second raceway surface of the second bearing ring,

      a first rigid element having a linear shape passing through the first point is disposed on the first contact region in the first finite element model,
      a second rigid element having a linear shape passing through the second point is disposed on the second contact region in the second finite element model, and
   the determination method comprises:

      calculating a first spring constant between the rolling element and the first bearing ring by using Hertz theory;
      calculating a second spring constant between the rolling element and the second bearing ring by using the Hertz theory;
      calculating a third spring constant of the first finite element model in the first contact region in which the first rigid element is disposed;
      calculating a fourth spring constant of the second finite element model in the second contact region in which the second rigid element is disposed;
      calculating a spring constant of the third finite element model based on the first spring constant, the second spring constant, the third spring constant, and the fourth spring constant; and
      determining at least one of rigidity, a stress, an amount of displacement, or a natural frequency of the rotary machine by using the calculated spring constant of the third finite element model.

2. The determination method according to claim 1, wherein

   the calculating a third spring constant includes calculating the third spring constant based on a displacement of a distance between the first contact region and a first reference region, the first reference region being located on the first raceway surface and different from the first contact region, the displacement occurring when a load is applied to the first finite element model in a direction of normal to the first contact region.

3. The determination method according to claim 2, wherein

   the rolling element is a ball,
   the first contact region has an elliptical shape when viewed in a direction of normal to the first raceway surface,
   the first reference region is located outside a first ellipse on the first raceway surface and inside a second ellipse on the first raceway surface,
   center points of the first contact region, the first ellipse, and the second ellipse coincide with one another when the first raceway surface is viewed in a direction of normal,
   a minor radius of the second ellipse is longer than a minor radius of the first ellipse,

a major radius of the second ellipse is longer than a major radius of the first ellipse,

the minor radius of the first ellipse is longer than four times as long as a minor radius of the first contact region,

the minor radius of the second ellipse is shorter than eight times as long as the minor radius of the first contact region,

the major radius of the first ellipse is longer than 1.5 times as long as a major radius of the first contact region, and

the major radius of the second ellipse is shorter than four times as long as the major radius of the first contact region.

4. The determination method according to claim 2, wherein

the rolling element is a roller,

the first contact region has a rectangular shape when the first raceway surface is viewed in a direction of normal,

the first reference region is located outside a first rectangle on the first contact region and inside a second rectangle on the first contact region,

center points of the first contact region, the first rectangle, and the second rectangle coincide with one another when the first raceway surface is viewed in a direction of normal,

a short side of the second rectangle is longer than a short side of the first rectangle,

a long side of the second rectangle is longer than a long side of the first rectangle,

the short side of the first rectangle is longer than four times as long as a short side of the first contact region,

the short side of the second rectangle is shorter than eight times as long as the short side of the first contact region,

the long side of the first rectangle is longer than 1.1 times as long as a long side of the first contact region, and

the long side of the second rectangle is shorter than twice as long as the long side of the first contact region.

5. The determination method according to claim 1, wherein

the calculating a fourth spring constant includes calculating the fourth spring constant based on a displacement of a distance between the second contact region and a second reference region, the second reference region being located on the second raceway surface and different from the second contact region, the displacement occurring when a load is applied to the second finite element model in a direction of normal to the second contact region.

6. The determination method according to claim 5, wherein

the rolling element is a ball,

the second contact region has an elliptical shape when viewed in a direction of normal to the second raceway surface,

the second reference region is located outside a third ellipse on the second raceway surface and inside a fourth ellipse on the second raceway surface,

center points of the second contact region, the third ellipse, and the fourth ellipse are disposed at positions coinciding with one another when the second raceway surface is viewed in a direction of normal,

a minor radius of the fourth ellipse is longer than a minor radius of the third ellipse,

a major radius of the fourth ellipse is longer than a major radius of the third ellipse,

the minor radius of the third ellipse is longer than four times as long as a minor radius of the second contact region,

the minor radius of the fourth ellipse is shorter than eight times as long as the minor radius of the second contact region,

the major radius of the third ellipse is longer than 1.5 times as long as a major radius of the second contact region, and

the major radius of the fourth ellipse is shorter than four times as long as the major radius of the second contact region.

7. The determination method according to claim 5, wherein

the rolling element is a roller,

the second contact region has a rectangular shape when the second raceway surface is viewed in a direction of normal,

the second reference region is located outside a third rectangle on the second contact region and inside a fourth rectangle on the second contact region,

center points of the second contact region, the third rectangle, and the fourth rectangle are disposed at positions coinciding with one another when the second raceway surface is viewed in a direction of normal,

a short side of the fourth rectangle is longer than a short side of the third rectangle,

a long side of the fourth rectangle is longer than a long side of the third rectangle,

the short side of the third rectangle is longer than four times as long as a short side of the second contact region,

the short side of the fourth rectangle is shorter than eight times as long as the short side of the second contact region,

the long side of the third rectangle is longer than 1.1 times as long as a long side of the second contact region, and

the long side of the fourth rectangle is shorter than twice as long as the long side of the second contact region.

8. The determination method according to any one of claims 1 to 7, wherein

the first spring constant is defined as Kh1,
the second spring constant is defined as Kh2,
the third spring constant is defined as Km1,
the fourth spring constant is defined as Km2, and

the spring constant of the third finite element model is defined as Kb, and

in the calculating a spring constant of the third finite element model, the spring constant of the third finite element model is calculated according to a relational expression below:
[Math. 3]

$$\left( \left( \frac{1}{Kh1} + \frac{1}{Kh2} \right) - \left( \frac{1}{Km1} + \frac{1}{Km2} \right) \right)^{-1} \ldots (3).$$

9. A program that causes a computer to determine a characteristic of a rotary machine having a bearing by using a finite element model, wherein

the bearing includes a rolling element, a first bearing ring, and a second bearing ring,

the first bearing ring is modeled as a first finite element model,

the second bearing ring is modeled as a second finite element model,

the rolling element is modeled as a third finite element model,

the third finite element model is a finite element model of a one-dimensional elastic body connecting

a first point included in a first contact region contacting the rolling element, the first contact region being on a first raceway surface of the first bearing ring, and

a second point included in a second contact region contacting the rolling element, the second contact region being on a second raceway surface of the second bearing ring,

a first rigid element having a linear shape passing through the first point is disposed on the first contact region in the first finite element model,

a second rigid element having a linear shape passing through the second point is disposed on the second contact region in the second finite element model, and

the program causes the computer to perform:

calculating a first spring constant between the rolling element and the first bearing ring by using Hertz theory;

calculating a second spring constant between the rolling element and the second bearing ring by using the Hertz theory;

calculating a third spring constant of the first finite element model in the first contact region in which the first rigid element is disposed;

calculating a fourth spring constant of the second finite element model in the second contact region in which the second rigid element is disposed;

calculating a spring constant of the third finite element model based on the first spring constant, the second spring constant, the third spring constant, and the fourth spring constant;

calculating a spring constant of the bearing by using the calculated spring constant of the third finite element model; and

determining at least one of rigidity, a stress, an amount of displacement, or a natural frequency of the rotary machine by using the calculated spring constant of the bearing.

10. A computing device that determines a characteristic of a rotary machine having a bearing by using a finite element model, the computing device comprising:

computing circuitry; and
a storage, wherein
the bearing includes a rolling element, a first bearing ring, and a second bearing ring,
the storage stores

a first finite element model obtained by modeling the first bearing ring,
a second finite element model obtained by modeling the second bearing ring, and
a third finite element model obtained by modeling the rolling element,

the third finite element model is a finite element model of a one-dimensional elastic body connecting

a first point included in a first contact region contacting the rolling element, the first contact region being on a first raceway surface of the first bearing ring, and
a second point included in a second contact region contacting the rolling element, the second contact region being on a second raceway surface of the second bearing ring,

the storage further stores

a first rigid element having a liner shape passing through the first point, the first rigid element being disposed on the first contact region in the first finite element model, and a second rigid element having a linear shape passing through the second point, the second rigid element being disposed on the second contact region in the second finite element model, and

the computing circuitry is configured to

calculate a first spring constant between the rolling element and the first bearing ring by using Hertz theory,
calculate a second spring constant between the rolling element and the second bearing ring by using the Hertz theory,
calculate a third spring constant of the first finite element model in the first contact region in which the first rigid element is disposed,
calculate a fourth spring constant of the second finite element model in the second contact region in which the second rigid element is disposed,
calculate a spring constant of the third finite element model based on the first spring constant, the second spring constant, the third spring constant, and the fourth spring constant, and
determine at least one of rigidity, a stress, an amount of displacement, or a natural frequency of the rotary machine by using the calculated spring constant of the third finite element model.

FIG.1

[EMBODIMENT : RADIAL BALL BEARING]

100

10

VIBRATION
DIRECTION

5

Ax1

Z
Y
X

DETERMINATION OF
NATURAL FREQUENCY

200

COMPUTING
DEVICE
201

COMPUTING
CIRCUITRY

202

STORAGE

FIG.2

(A)   [ACTUAL ROLLING BEARING]

(B)   [FINITE ELEMENT MODEL]

MODELING

EP 4 675 247 A1

FIG.3

(A)

10M
Sf2
15M
Ar2
Sf1
Ar1
12M
11M

X Z
Y

(B)

Ar1
15M
P1
RL3
RL2
RL1
X Z
Y

EP 4 675 247 A1

# FIG.4

(A)

(B)

EP 4 675 247 A1

# FIG.5

[HERTZ THEORY]    [FINITE ELEMENT MODEL]

$$\frac{1}{Kh1} + \frac{1}{Kh2} = \frac{1}{Km1} + \frac{1}{Kb} + \frac{1}{Km2}$$

$$Kb = \left(\left(\frac{1}{Kh1} + \frac{1}{Kh2}\right) - \left(\frac{1}{Km1} + \frac{1}{Km2}\right)\right)^{-1}$$

FIG.6

FIG.7

FIG.8

```
                        ┌─────────────┐
                        │    START    │
                        └──────┬──────┘
                               │
                               ▼                        ⌐S11
┌──────────────────────────────────────────────────────────┐
│ CALCULATE SPRING CONSTANT Kh1 OF ROLLING ELEMENT 15        │
│ IN CONTACT REGION Ar1 BY USING HERTZ THEORY                │
└──────────────────────────────┬───────────────────────────┘
                               │
                               ▼                        ⌐S12
┌──────────────────────────────────────────────────────────┐
│ CALCULATE SPRING CONSTANT Kh2 OF ROLLING ELEMENT 15        │
│ IN CONTACT REGION Ar2 BY USING HERTZ THEORY                │
└──────────────────────────────┬───────────────────────────┘
                               │
                               ▼                        ⌐S13
┌──────────────────────────────────────────────────────────┐
│ CALCULATE SPRING CONSTANT Km1 OF FINITE ELEMENT            │
│ MODEL 11M IN CONTACT REGION Ar1                            │
└──────────────────────────────┬───────────────────────────┘
                               │
                               ▼                        ⌐S14
┌──────────────────────────────────────────────────────────┐
│ CALCULATE SPRING CONSTANT Km2 OF FINITE ELEMENT            │
│ MODEL 12M IN CONTACT REGION Ar2                            │
└──────────────────────────────┬───────────────────────────┘
                               │
                               ▼                        ⌐S15
┌──────────────────────────────────────────────────────────┐
│ CALCULATE SPRING CONSTANT Kb OF FINITE ELEMENT             │
│ MODEL 15M BASED ON SPRING CONSTANTS Kh1, Kh2, Km1,         │
│ AND Km2                                                    │
└──────────────────────────────┬───────────────────────────┘
                               │
                               ▼                        ⌐S16
┌──────────────────────────────────────────────────────────┐
│ DETERMINE NATURAL FREQUENCY OF ROTARY MACHINE 100          │
│ BY USING SPRING CONSTANT Kb                                │
└──────────────────────────────┬───────────────────────────┘
                               │
                               ▼
                        ┌─────────────┐
                        │     END     │
                        └─────────────┘
```

FIG.9

[FIRST MODIFICATION : RADIAL ROLLER BEARING]

FIG.10

FIG.11

FIG.12    [SECOND MODIFICATION : THRUST BEARING]

12B

10B

15B

11B

Ax3

FIG.13  [THIRD MODIFICATION : ANGULAR BALL BEARING]

12C

P2

10C

15C

15M

11C

P1

FIG.14 [FOURTH MODIFICATION:ANGULAR BALL BEARING]

FIG.15 [FOURTH MODIFICATION : ANGULAR BALL BEARING]

12D

RL7

P2

P1

RL8

11D

## INTERNATIONAL SEARCH REPORT

| International application No. |
|---|
| **PCT/JP2024/005694** |

| A. | CLASSIFICATION OF SUBJECT MATTER |
|---|---|

*G01M 13/045*(2019.01)i
FI: G01M13/045

According to International Patent Classification (IPC) or to both national classification and IPC

| B. | FIELDS SEARCHED |
|---|---|

Minimum documentation searched (classification system followed by classification symbols)

G01M13/04-13/045

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2011-198073 A (NSK LTD.) 06 October 2011 (2011-10-06)<br>entire text, all drawings | 1-10 |
| A | JP 2015-31626 A (NTN CORPORATION) 16 February 2015 (2015-02-16)<br>entire text, all drawings | 1-10 |
| A | JP 2015-31563 A (NTN CORPORATION) 16 February 2015 (2015-02-16)<br>entire text, all drawings | 1-10 |
| A | JP 2012-168000 A (NIPPON STEEL CORPORATION) 06 September 2012 (2012-09-06)<br>entire text, all drawings | 1-10 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **05 March 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/005694**

| Patent document cited in search report | | | Publication date (day/month/year) | Patent family member(s) | | | Publication date (day/month/year) |
|---|---|---|---|---|---|---|---|
| JP | 2011-198073 | A | 06 October 2011 | (Family: none) | | | |
| JP | 2015-31626 | A | 16 February 2015 | WO entire text, all drawings | 2015/015987 | A1 | |
| JP | 2015-31563 | A | 16 February 2015 | WO entire text, all drawings | 2015/015987 | A1 | |
| JP | 2012-168000 | A | 06 September 2012 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019045472 A